# EUROPEAN PATENT APPLICATION

(11) **EP 4 704 005 A1**
(43) Date of publication of application: **04.03.2026**
(21) Application number: 25183011.3
(22) Date of filing: 16.06.2025
(51) Int. Cl.: G06Q 10/30, G06Q 30/018, G06Q 10/06, G06Q 30/0208

(54) **RENEWABLE MATERIAL TRACEABILITY SYSTEM AND RENEWABLE MATERIAL TRACEABILITY METHOD**

(30) Priority: 28.08.2024 JP 2024146908
(71) Applicant: Hitachi, Ltd., Tokyo 100-8280 (JP)
(72) Inventor: OHORI, Toshiki, Tokyo, 1008280 (JP); SOGA, Shuji, Tokyo, 1008280 (JP)
(74) Representative: Manitz Finsterwald Patent- und Rechtsanwaltspartnerschaft mbB

(57) **Abstract**

A renewable material traceability system acquires information on a renewable material provided by a provider and information on the provider, allocates a lot of the renewable material to a product in a production process of the product, and notifies the provider of evaluation data obtained based on data associated with the provider from among a traceability data group, the evaluation data being data as an evaluation related to the provision by the provider, the traceability data group including material traceability data, which is data including a set of information on the renewable material and information on the provider, and production traceability data, which is data including information indicating a lot allocated to each product for each of one or more types of renewable materials used as materials for the product.

## Description

### BACKGROUND OF THE INVENTION

### 1. Field of the Invention

The present invention generally relates to a technique for traceability of a renewable material.

### 2. Description of Related Art

In recent years, in addition to factors such as serious environmental problems and depletion of resources, the promotion of Industry 4.0 and changes in consumer perceptions have created a demand for a system that realizes environmentally friendly circular economy rather than the linear economy of the past.

There are various strategies for realizing the circulation, and in particular, recycling of resources has been carried out for a long time.

Examples of renewable materials include plastics used in many modern products. Since plastic is an important resource mainly made of petroleum, recycling thereof is essential for realizing the circulation.

There are various types of plastics with different properties, and if the plastics are not sorted by type or recycled with impurities mixed in, the quality of the recycled plastic will decrease and the use thereof will be limited. Therefore, in order to appropriately sort and recycle the renewable materials, a traceability system that manages these processes and acquires information is effective.

In the related art, as disclosed in PTL 1 below, a traceability system that acquires disposal history information of a renewable material is known.

As disclosed in PTL 2 below, a method is known in which a recycling treatment step of a renewable material is tracked and traceability until the renewable material is re-made into a product is acquired.

### Citation List

### Patent Literature

PTL 1: JP2021-131620A
PTL 2: JP2023-123209A

### SUMMARY OF THE INVENTION

However, in related techniques of acquiring any information from disposal to reproduction of a renewable material, it is only known how the renewable material was disposed and recycled, and what type of product the renewable material was made into. In order to promote the circulation of the renewable material, it is desirable to encourage providers to provide renewable materials, but it is difficult to encourage providers to provide renewable materials with related techniques.

Therefore, an object of the invention is to encourage providers to provide renewable materials.

A renewable material traceability system acquires information on a renewable material provided by a provider and information on the provider, allocates a lot of the renewable material to a product in a production process of the product, and notifies the provider of evaluation data obtained based on data associated with the provider from among a traceability data group, the evaluation data being data as an evaluation related to the provision by the provider, the traceability data group including material traceability data, which is data including a set of information on the renewable material and information on the provider, and production traceability data, which is data including information indicating a lot allocated to each product for each of one or more types of renewable materials used as materials for the product.

According to the invention, it is possible to encourage providers to provide renewable materials. Problems, configurations, and effects other than those described above will become apparent in the following description of an embodiment of the invention.

### BRIEF DESCRIPTION OF THE DRAWINGS

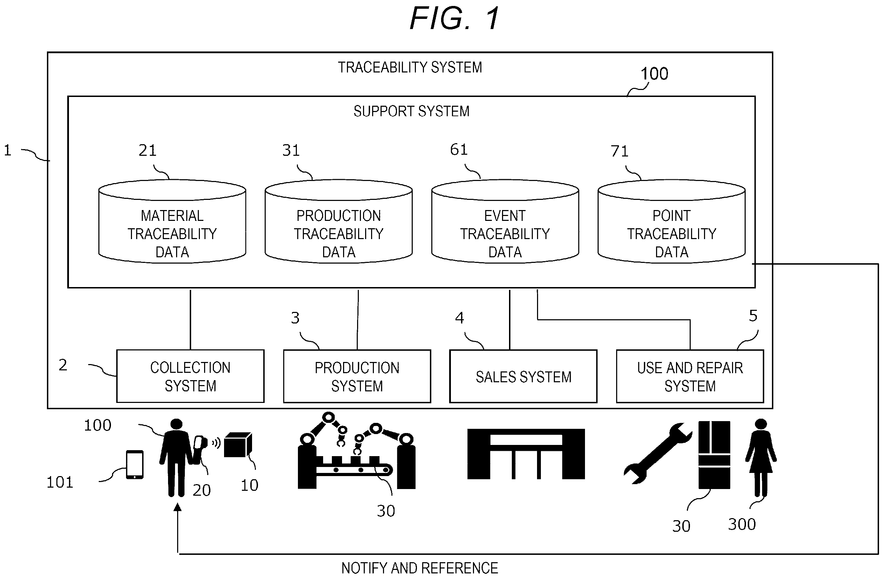

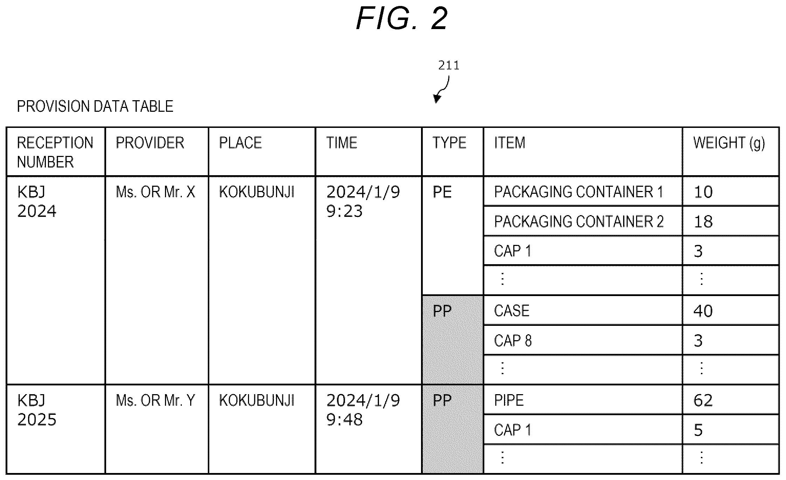

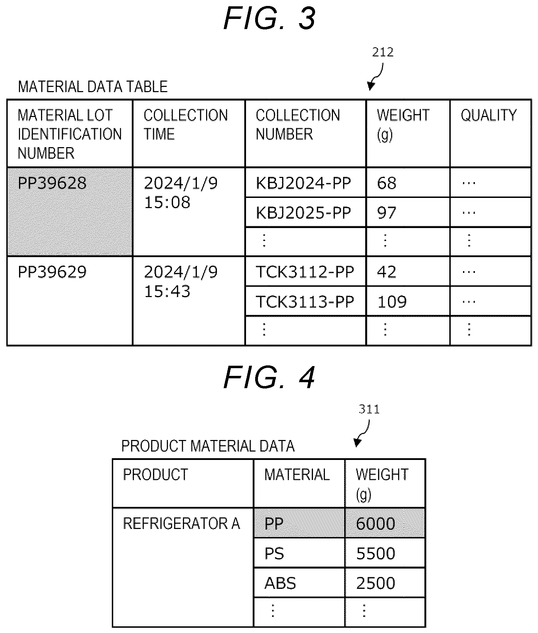

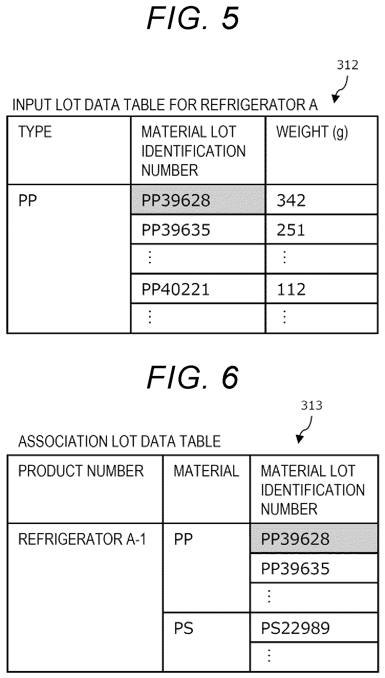

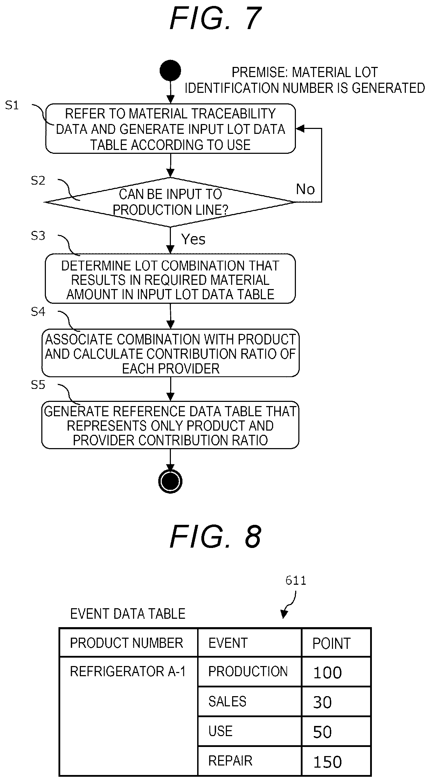

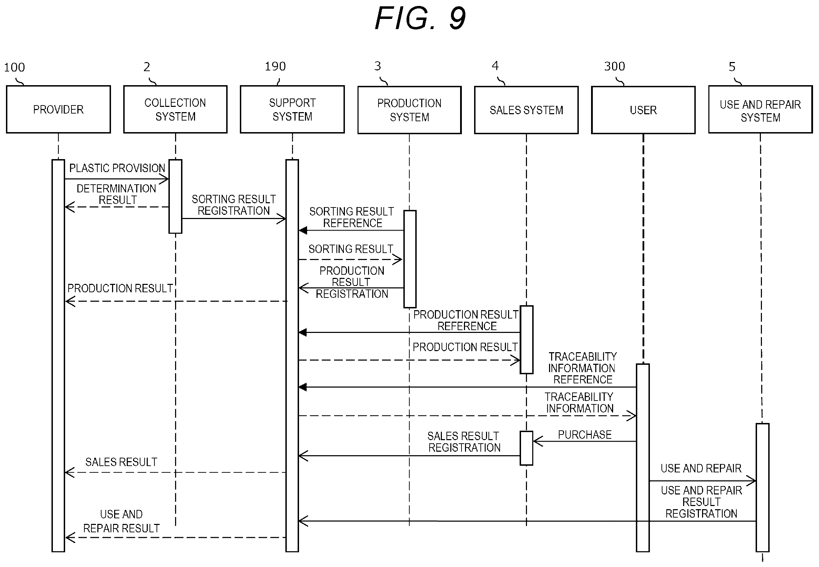

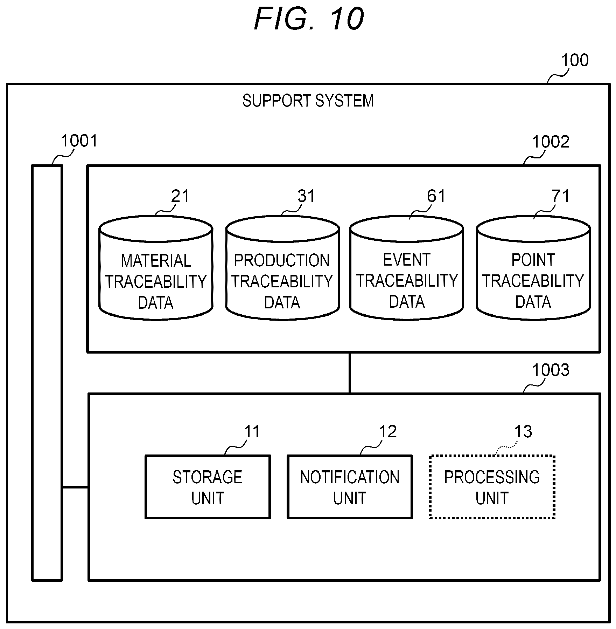

FIG. 1 is a diagram illustrating a configuration of a traceability system for a renewable material according to an embodiment. FIG. 2 is a diagram of a data table generated when the renewable material according to the embodiment is provided. FIG. 3 is a diagram of a data table generated when the renewable material according to the embodiment is collected. FIG. 4 is a diagram of a data table showing materials required for producing a product using the renewable material according to the embodiment. FIG. 5 is a diagram of a data table showing a combination of input lots to produce a product using the renewable material according to the embodiment. FIG. 6 is a diagram of a data table showing association of the lots with the product using the renewable material according to the embodiment. FIG. 7 is a flowchart showing a flow of associating the provided renewable material according to the embodiment with the product using the renewable material. FIG. 8 is a data table showing points given to all providers for each event of the product according to the embodiment. FIG. 9 is a diagram illustrating a flow of information between persons and systems according to the embodiment. FIG. 10 is a diagram illustrating a configuration of a support system according to the embodiment.

### DESCRIPTION OF EMBODIMENTS

In the following description, an "interface device" may be one or more interface devices. The one or more interface devices may be at least one of the following.

I/O interface device, which is one or more input/output (I/O) interface devices. The input/output (I/O) interface device is an interface device for at least one of an I/O device and a remote display computer. The I/O interface device for a display computer may be a communication interface device. The at least one I/O device may be a user interface device, for example, an input device such as a keyboard and a pointing device, or an output device such as a display device.

A communication interface device, which is one or more communication interface devices. The one or more communication interface devices may be one or more communication interface devices of the same type (for example, one or more network interface cards (NICs)) or two or more communication interface devices of different types (for example, NIC and host bus adapter (HBA)).

In the following description, a "memory" is one or more memory devices, which are examples of one or more storage devices, and may be typically a main storage device. The at least one memory device in the memory may be a volatile memory device or a non-volatile memory device.

In the following description, a "persistent storage device" may be one or more persistent storage devices, which are examples of one or more storage devices. The persistent storage device may typically be a non-volatile storage device (for example, an auxiliary storage device), and specifically, for example, a hard disk drive (HDD), a solid state drive (SSD), a non-volatile memory express (NVMe) drive, or a storage class memory (SCM).

In the following description, a "storage device" may be at least a memory among a memory and a persistent storage device.

In the following description, a "processor" may be one or more processor devices. The at least one processor device may be typically a microprocessor device such as a central processing unit (CPU), and may be another type of processor device such as a graphics processing unit (GPU). The at least one processor device may be a single core or a multi-core. The at least one processor device may be a processor core. The at least one processor device may be a broadly defined processor device such as a circuit (for example, a field-programmable gate array (FPGA), a complex programmable logic device (CPLD), or an application specific integrated circuit (ASIC)) that is a collection of gate arrays in a hardware description language for performing a part or all the processing.

In the following description, functions may be described by an expression of "yyy unit", and the functions may be implemented by a processor executing one or more computer programs, may be implemented by one or more hardware circuits (for example, FPGAs or ASICs), or may be implemented by a combination thereof. When a function is implemented by executing a program by a processor, the function may be at least a part of the processor as specified processing is executed using a storage device and/or an interface device as appropriate. Processing described with a function as a subject may be processing executed by a processor or a device including the processor. The program may be installed from a program source. The program source may be, for example, a program distribution computer or a computer-readable storage medium (for example, a non-transitory storage medium). Description of functions is an example. A plurality of functions may be integrated into one function, or one function may be divided into a plurality of functions.

In the following description, data that can be output in response to an input may be described by an expression such as "xxx table", whereas the data may be data of any structure (for example, may be structured data or unstructured data), and may be a learning model such as a neural network, a genetic algorithm, or a random forest that generates an output in response to an input. Therefore, the "xxx table" can be referred to as "xxx data". In the following description, a configuration of each table is an example. One table may be divided into two or more tables, or all or a part of two or more tables may be one table.

In the following description, identification numbers, names, or the like are examples of identification information, and information other than numbers or the like may be used as the identification information.

Hereinafter, an embodiment according to the invention will be described. The present embodiment is an example, and the invention is not limited to the present embodiment.

FIG. 1 is a diagram illustrating a configuration of a traceability system 1 of a renewable material according to an embodiment. In the present embodiment, it is assumed that the renewable material provided is plastic. In the present embodiment, a "provider" means a person who can provide plastic, regardless of whether the person actually provided plastic (whether the person brought in plastic for collection). The provider may be typically a general consumer, but may also be an organization or the like.

The traceability system 1 includes a collection system 2 that acquires information on a plastic 10 brought by a provider 100, a production system 3 that recycles plastic groups including the plastic 10 collected by lot and allocates lots to a product 30 in a production process, a sales system 4 that acquires sales information (information on sales) of the product 30, a use and repair system 5 that acquires use information (information on use) and repair information (information on repair) of the product 30, and a support system 190 that is communicably connected to the systems 2 to 5 and stores traceability data. At least one of the systems 2 to 5 and 100 may be a computer system, specifically, a physical computer system (one or more physical computers) or a logical computer system based on a physical computer system (for example, a virtual machine or a service system on a cloud). At least one of the systems 2 to 5 and 100 may be a system including a computer system and another device (for example, equipment).

For example, as illustrated in FIG. 10, the support system 190 may be a computer system including an interface device 1001, a storage device 1002, and a processor 1003 connected to the devices 1001 and 1002. The interface device 1001 communicates with the systems 2 to 5 via, for example, a communication network (for example, the Internet or a wide area network (WAN)). The storage device 1002 stores data and programs (details of data stored in the storage device 1002 will be described later). When a program is executed by the processor 1003, functions such as a storage unit 11 and a notification unit 12 are implemented. At least a part of data processing functions of the systems 2 to 5 may be implemented by the support system 190 (for example, all or part of the data processing performed by the systems 2 to 5 may be performed by the support system 190), and a processing unit 13 may be implemented as the data processing functions. The storage unit 11 stores traceability data 21, 31, 61, and 71 based on data obtained from the systems 2 to 5 in the storage device 1002. The notification unit 12 notifies the provider 100 of evaluation data to be described later, which is based on data associated with the provider 100 among the traceability data 21, 31, 61, and 71. Each of the traceability data 21, 31, 61, and 71 may be a database or data in a format other than a database.

According to such a traceability system 1, various traceability data related to the plastic 10 are acquired and managed in association with the provider 100. In order to facilitate transmission and reception of information between the provider 100 and the traceability system 1, an application linked to the traceability system 1 (hereinafter, referred to as a linked application) may be prepared and installed in a mobile terminal 101 of the provider 100.

First, in order to sort and provide the plastic 10, the provider 100 goes to a collection space equipped with equipment linked to the collection system 2. The space may be a garbage dump in a community center where people gather.

Prior to providing the plastic 10, the provider 100 registers his or her own information in the collection system 2 using a personal mobile terminal 101 (a mobile information processing terminal such as a smartphone) or the like. At this time, it is desirable that a two-dimensional barcode such as a QR code (registered trademark) is attached to the equipment linked to the collection system 2, and information on the provider 100 in the linked application is automatically registered in the collection system 2 only by reading the two-dimensional barcode with the mobile terminal 101. That is, provider information, which is information on the provider 100, is registered in advance in the linked application in the mobile terminal 101, and when the linked application reads the QR code in the equipment linked to the collection system 2 using a camera of the mobile terminal 101, the provider information registered in the linked application may be transmitted to a link (for example, URL) represented by the QR code, and thus the provider information may be registered in the collection system 2. Accordingly, it is possible to associate the provider 100 with the plastic 10. That is, when sorting and provision of the plastic 10 are started after reception to the collection system 2 is completed together with the provider information, renewable material information (information on renewable materials) on the sorting of the plastic 10 is associated with the provider information. At the time of reception, the collection system 2 may issue a reception number to the provider 100, and the renewable material information including the reception number may be input to the collection system 2.

The collection system 2 communicates with, for example, a determination device 20 (for example, a resin determination handheld sensor) that determines the type of the plastic 10, either directly or via a linked application. The determination device 20 assists the provider 100 in sorting the plastic 10. The determination device 20 may be one component of the collection system 2. For example, the determination device 20 determines the type of the plastic 10 (for example, polypropylene (PP) or polyethylene (PE)) and displays a determination result or notifies the linked application (the determination result is displayed on the mobile terminal 101 by the linked application). Then, the collection system 2 acquires the renewable material information of the plastic 10 through the sorting and provision by the provider 100. Here, the "renewable material information" includes a provision place and provision time of the plastic 10, the type of the plastic 10, one or more items for each type, the weight of each item, and the like. The renewable material information may be displayed for the provider 100 in real time on a screen of the mobile terminal 101 of the provider 100 or a screen of linked equipment (for example, equipment in the collection space where the plastic 10 can be put). The collection system 2 may generate a provision data table 211 as illustrated in FIG. 2 and transmit the provision data table 211 to the support system 190. The storage unit 11 of the support system 190 stores the provision data table 211 in material traceability data 21. In the provision data table 211, values (instances) of data items such as "reception number", "provider", "place", "time", "type", "item", and "weight" are as follows, for example. For example, the following generates provision data table 211 including a set of provider information including "provider", and renewable material information including "reception number", "place", "time", "type", "item", and "weight".

Reception number: A number issued by the collection system 2. One reception number is issued for one provision.

Provider: Information included in provider information acquired from a linked application or the like, and identification information such as a name of the provider. At least a part of the provider information may be anonymized by at least one of the linked application, the collection system 2, and the support system 190 (storage unit 11) .

Place: A place where equipment for collection is installed and where provision is performed. The place may be input by any method. For example, the place may be identified by the collection system 2 depending on which equipment the information is from, or may be identified based on location information included in the provider information from the mobile terminal 101 of the provider 100. The location information may be included in the above QR code and the renewable material information may include that location information, or the location information may be the location information obtained from the determination device 20.

Time: The time when provision is performed. The time may be input by any method. For example, the time may be a time when reception is performed by the provider 100 on the collection system 2, a time acquired from the determination device 20, or a time acquired from a linked application.

Type: The type of the plastic 10. The type of the plastic may be input by any method. For example, a determination result of the plastic type by the determination device 20 may be input to the collection system 2 via or not via a linked application, or the provider 100 may manually input the determination result while looking at a screen of the determination device 20 or the linked application.

Item: An item of the plastic 10 (for example, a name of a plastic component). The item may be input by any method. For example, the item may be automatically determined and input by the collection system 2 from an imaging screen of the plastic 10 (a screen of the plastic 10 imaged by equipment) sorted and provided by the provider 100 for each plastic type, or may be input by the provider 100.

Weight: The weight of the plastic 10. The weight may be input by any method. For example, the weight may be measured by a sensor or the like provided in equipment, and the collection system 2 may associate the weight measured by the sensor or the like with an automatic determination result of an item to generate a set of the item and the weight for each item.

At the timing when the provision of the plastic 10 is completed, the support system 190 may give a point corresponding to the type, weight, or the like of the plastic 10 to the provider 100 via the linked application or the like. For example, the notification unit 12 may notify the linked application of the mobile terminal 101 of data indicating the point. The point may be electronic money or a point that can be exchanged for prizes. The information on the given point is stored in point traceability data 71 by the storage unit 11 in association with the information on the provider 100.

In a collection space such as a garbage dump of a community center, other providers who provide plastic gather in addition to the provider 100. Therefore, when a collection company collects the provided plastics, the collection company collects the plastics as lots including plastics other than the plastic 10 sorted into the corresponding type among a plurality of types. That is, there is a lot for each plastic type. The collection is performed at an optimum frequency in consideration of transportation efficiency.

When collecting plastics, the collection system 2 groups a plurality of (or one) provision records (records in the provision data table 211) related to the plastics in a collection space, according to the type of the plastic (that is, classifies information belonging to the same plastic type specified from different records into the same group), and assigns a material lot identification number to each collection lot. At this time, in order to simplify the management up to the production system 3, the collection system 2 may issue a sticker indicating the material lot identification number (for example, a sticker with a QR code or a barcode indicating the material lot identification number), and the collection company may attach the sticker to a cardboard box or the like in which lots are packed. As a result, a material data table 212 related to collection as illustrated in FIG. 3 is generated by the collection system 2. FIG. 3 illustrates that PP is collectively collected among the plastics provided by Ms. or Mr. X and Ms. or Mr. Y listed in the provision data table 211 of FIG. 2. The material data table 212 is also transmitted from the collection system 2 to the support system 190, and the storage unit 11 stores the material data table 212 in the material traceability data 21. In the material data table 212, values (instances) of data items such as "material lot identification number", "collection time", "collection number", "weight", and "quality" are as follows, for example.

Material lot identification number: An identification number of a lot issued for each lot by the collection system 2.

Collection time: A time when collection is performed. The collection time may be input by any method. For example, the collection time may be a time when reception is performed by a collection company on the collection system 2.

Collection number: A number including a set of a reception number in the provision data table 211 and a type in the provision data table 211. The collection number identifies which plastic type is in which provision. One or more collection numbers are associated with one material lot identification number.

Weight: The weight of a plastic type provided for each collection number and identified based on that collection number. Specifically, the weight is the sum of weights of all items belonging to the plastic type identified based on the provision data table 211 using the collection number as a key. According to the examples of FIGS. 2 and 3, the weight corresponding to a collection number "KBJ2024-PP" is the sum of weights of all items belonging to a reception number "KBJ2024" and a type "PP" in the provision data table 211.

Quality: Data that can be added later at the time of production rather than at the time of collection, as will be described in the next paragraph. Specifically, for example, the quality is a quality (for example, viscosity or durability) measured for one lot when the one lot is newly generated by recycling one or more lots.

The plastics collected in lots by the collection company are sometimes washed to remove impurities, and then crushed into flakes in lots. When a lot is small and difficult to process, a plurality of lots may be treated as one lot, re-grouped, and collectively processed. At that time, the production system 3 updates the material data table 212 according to the re-grouping status. After the flakes are heated and melted, the recycled plastics are processed into granular pellets. In this recycling process, qualities such as viscosity, durability, and color of the recycled plastics are measured, and the production system 3 adds quality information to the material data table 212 stored in the material traceability data 21 via the storage unit 11.

Next, when producing a product using recycled plastics, the production system 3 determines lots to be input into a production line. The production system 3 holds material data 311 required for producing a product as illustrated in FIG. 4, for example, for each product type (for example, product model number). The material data 311 indicates one or more types of materials required for the product and weights required for each material. Here, for example, it is assumed that the amount of PP required for producing one refrigerator A is 6000 g. Normally, when products are produced on a line, a plurality of products are produced at the same time. Therefore, one lot is not enough, and a plurality of lots are input into the production. Therefore, when determining input lots, the production system 3 generates a combination of lots in a required amount by focusing on the collection time and region (the place itself or a region to which the place belongs) acquired by the collection system 2, the quality information acquired by the production system 3, or the like. When lots are input only by the amount that will be used in a product, it is possible to reduce the amount of plastic that is surplus and discarded during production. Specifically, for example, in order to produce one refrigerator A, in terms of PP, a total weight of lots of PP is 6000 g or more, but the production system 3 determines a combination of lots of PP such that a difference between the total weight and the required weight of 6000 g is as small as possible.

When input lots are determined by focusing on the collection time, first-in first-out is possible in a warehouse where recycled plastics are stored, and thus the burden in the operation of the warehouse can be reduced. A time-series connection between provided plastics and produced products is also strengthened. That is, the production system 3 sets the lots constituting a lot combination as lots having the same collection time or the same time zone (for example, the time zone is 30 minutes to 1 hour) .

When input lots are determined by focusing on the collection region, if only lots related to one region are used, the connection between the produced products and the region is strengthened, and resources can be produced locally and consumed locally. That is, the production system 3 may set the lots constituting a lot combination as lots having the same collection region (place (region of place) identified based on the provision data table 211 for each collection number belonging to the material lot identification number). On the other hand, when lots of a plurality of regions over a wide range are used, a broad connection can be generated. That is, the production system 3 may set the lots constituting a lot combination as lots having different collection regions.

When input lots are determined by focusing on the quality, the quality of products can be improved accordingly. When input lot data is generated, the quality when mixed with another lot can be predicted using materials informatics. Accordingly, even recycled plastics that have not been able to be used in products in terms of quality may satisfy a predetermined quality and be able to be used in products. That is, this leads to an increase in usable recycled plastics. That is, the production system 3 sets the lots constituting a lot combination as lots having the same or similar quality.

When determining input lots, the production system 3 may consider time, region, and quality at the same time. Accordingly, the effects described above are expected to be expressed in combination.

In a case where a calculation for generating a combination is not easy, particularly when materials informatics is used, the production system 3 may transmit conditions and necessary data to an external server and use a CPU of the external server for the calculation.

FIG. 5 shows an example of input lot data table 312 generated by any of the above methods. The input lot data table 312 is stored in the production system 3 for each material type used in a product. The input lot data table 312 indicates a material lot identification number and a weight for each of one or more lots used in a product, for each material type (plastic type). For example, a lot with a material lot identification number "PP39628" is the same as the lot illustrated in FIG. 3. These are implemented by acquiring traceability by lot management. The weight corresponding to a material lot identification number is the sum of weights corresponding to all collection numbers identified based on the material data table 212 using the material lot identification number as a key. The input lot data table 312 is transmitted from the production system 3 to the support system 190 and stored in the production traceability data 31 by the storage unit 11.

Next, the determined input lots are transported to a product production plant and used to produce products. For example, based on the material data 311 illustrated in FIG. 4, the amounts of a plurality of plastics required for producing a desired number of refrigerators A are known, and the input lots satisfy that amount. At the timing of producing, input lots including a plurality of lots are collectively processed, but may be put in the same bag or the like at the timing of transportation.

Subsequently, the production of the product 30 is completed using the input lots. Lots and products have a many-to-many relation at the time of production, but when the production is completed, it is necessary to associate the lots and the products again in a many-to-one or one-to-many relation.

For example, when the product 30 is one refrigerator A, the refrigerator A is referred to as a refrigerator A-1, and the production system 3 allocates a combination of lots associated with the refrigerator A-1 from among the input lots. At this time, as in the case of generating a combination of input lots, the production system 3 generates a combination of lots in an amount required for producing the refrigerator A-1 by focusing on the collection time and region acquired by the collection system 2, the quality information acquired by the production system 3, or the like. The amount of PP required for producing the refrigerator A-1 is 6000 g, but a total amount of lots may have an error depending on the combination of the lots.

When a lot is allocated to a product, the production system 3 may limit the use of one lot to one product. Accordingly, the plastic 10 provided by the provider 100 is used in one product, and the plastic 10 and the product are strongly connected. As a result, the contribution of the provider 100 to the recycling for one product can be increased.

The production system 3 may be configured such that the use of one lot is divided into a plurality of products. Accordingly, the plastic 10 provided by the provider 100 is used in a plurality of products, enabling the provider 100 to make a broad contribution to the production of products using recycled plastics.

It is preferable that the provider 100 can select the number of lots to be used in advance via a linked application or the like. That is, either limiting the use of one lot to one product or dividing the use of one lot into a plurality of products may be performed in accordance with a request from the provider 100 (for example, a request included in the provider information).

FIG. 6 is a diagram illustrating an example of associating lots with a product. For example, the lot with a material lot identification number "PP39628" is the same as the lot illustrated in FIGS. 3 and 5. An association lot data table 313 is generated by the production system 3, transmitted to the support system 190, and stored in the production traceability data 31 by the storage unit 11. The association lot data table 313 may be generated for each product, and indicates a producing number of a product, a material (plastic type) used in the product, and a material lot identification number of each of one or more lots constituting the material for each material. The association lot data table 313 indicates which lot is used in which product, and a provider can be identified based on the lot via the material data table 212 and the provision data table 211. Therefore, it is possible to know a plastic provided by which provider is used in the production of which product.

After the association is completed, the notification unit 12 calculates a contribution ratio of each provider including the provider 100 who contributes to the production of the product 30, using the traceability data 21 and 31 so far. In the calculation of the contribution ratio, the notification unit 12 may assign a weighting in consideration of the amount, quality, and the like of provided plastics. The calculation result is output as a reference data table, and the storage unit 11 stores the reference data table of the calculation result in the point traceability data 71. Accordingly, when an event related to a product occurs, a point can be allocated to a provider by referring to the reference data table.

FIG. 7 is a flowchart illustrating a flow of associating lots including the plastic 10 with a product using the lots in the production system 3 described above. The process starts on the premise that a material lot identification number is generated in the collection system 2.

That is, in S1, the production system 3 refers to the material traceability data 21 (in particular, the material data table 212) and generates an input lot data table 312 according to the use (for example, the production of the refrigerator A).

There is a timing when lots are mixed together during production of a product, and once that timing has passed, there is no going back. Therefore, in S2, the production system 3 determines whether lots can be input to a production line before determining input lots.

If the determination result of S2 is true (S2: Yes), in S3, the production system 3 specifies a required weight for the product based on the product material data 311 for each plastic type required for the product, and determines a lot combination equal to or greater than the required weight based on the input lot data table 312.

In S4, the production system 3 generates an association lot data table 313 in which the lot combination is associated with the product, and stores the association lot data table 313 in the production traceability data 31 via the storage unit 11. For the product, the production system 3 identifies providers who provide plastics in each lot constituting the lot combination, based on the material traceability data 21, and provides a contribution ratio for each identified provider. For example, for one product, the contribution ratio for each plastic type may be a ratio of a weight of plastics provided by a provider to a total weight of that plastic type. A predetermined weighting may be reflected on the ratio. For one product, the contribution ratio of each provider may be a contribution ratio determined based on the contribution ratio for each plastic type (for example, an average of the contribution ratios of all plastic types).

In S5, the production system 3 generates a reference data table indicating the product and the contribution ratio of the provider. The reference data table may be stored in the production system 3 or may be stored in the point traceability data 71 via the storage unit 11.

FIG. 8 illustrates an event data table 611 of points given to all providers for events of the refrigerator A-1**.** When an event related to a product occurs, the production system 3 or the notification unit 12 divides the points according to the contribution ratio of each provider listed in the reference data table and gives the divided points to each provider. At this time, the notification unit 12 may simultaneously notify data of various events. The information on the given points is stored in the point traceability data 71 in association with the information on each provider. The event data table 611 is prepared for each product, for example. The event data table 611 indicates points for each of one or more events for a product. Each time an event such as production (production completion), sales, use, or repair occurs (for example, each time information indicating the occurrence of an event is detected by any of the systems 3 to 5 or each time the information is input to the support system 190), points corresponding to that event occurring for the product may be distributed according to the contribution ratio of each provider related to the product.

Finally, the production system 3 stores information indicating that the production of the product is completed in the event traceability data 61 using the storage unit 11.

When the production completion information is uploaded to event traceability data 61, the traceability system 1 recognizes that a production event has occurred, and uses the notification unit 12 to notify each provider of the production event and give points. The notification and the points may be given to the provider 100 via a linked application or the like installed in the mobile terminal 101 owned by the provider 100.

After being produced, the product 30 is placed in a store or put on display at an EC site and sold to a user 300 of the product 30. The sales system 4 acquires the information and stores the information in the event traceability data 61 using the storage unit 11. The information related to sales and the information stored in the event traceability data 61 may include information indicating a product number, a sales place, and the like of a sold product.

When selling the product 30, the user 300 may be allowed to access the traceability system 1 and refer to the traceability data 21 and 31 before purchasing the product 30. Accordingly, the history of plastics used in the product 30 is known, and the user 300 can use the history to decide whether to purchase a product.

When sales information is uploaded to the event traceability data 61, the traceability system 1 recognizes that a sales event has occurred, and uses the notification unit 12 to notify each provider of the sales event and give points. The notification and the points may be given to the provider 100 via an application or the like installed in the mobile terminal 101 owned by the provider 100.

The user 300 uses the product 30 after purchasing the product 30, and repairs the product 30 if the product 30 breaks down. Use and repair information of the product 30 is linked to the use and repair system 5 with the permission of the user 300. The use information of the product 30 includes a specific number of operations, an operating time, and the like, and the repair information includes a total number of repairs and the like. An incentive such as points may be given to the user 300 in return of the use and repair information. The use and repair system 5 stores the linked information in the event traceability data 61 using the storage unit 11.

When the use and repair information is uploaded to the event traceability data 61, the traceability system 1 recognizes that a use and repair event has occurred, and uses the notification unit 12 to notify each provider of the use and repair event and give points. The notification and the points may be given to the provider 100 via an application or the like installed in the mobile terminal 101 owned by the provider 100. Depending on the content of the use and repair information, the total amount of points to be given to all providers can be changed, for example, the points generated in the second repair are twice the first repair. That is, when use or repair, which is an example of an event after production is completed, occurs, a use time, the number of repairs, and the like are set as indicators of the contribution that a provider made to a product that is made of plastics provided by the provider, and points are added to the provider based on the indicators.

FIG. 9 is a diagram illustrating a flow of information between persons and systems according to the above embodiment. This is an example showing the flow in the present embodiment, and the flow is not limited to this example and includes other embodiments.

According to FIG. 9, an example of information returned to the provider 100 is as follows. Any of the following information may be displayed from the notification unit 12 of the support system via the linked application of the mobile terminal 101, or may be notified to the provider 100 by another method. In the following description, a "traceability data group" is at least a part of the traceability data 21, 31, 61, and 71. At least a part of the following information is based on data associated with the provider 100 in the traceability data group, that is, data that can be traced using the provider 100 as a key.

Information (for example, a plastic type and a weight thereof) indicating a determination result from the collection system 2 with respect to plastic provision.

Information on a production result regarding completion of production of a product produced using provided plastic (for example, how much the plastic provided by the provider 100 is used in which product, or a point distributed from a production point based on a contribution ratio calculated based on the provision).

Information on a sales result regarding sales of a product produced using provided plastic (for example, purchase of a product using the plastic provided by the provider 100 or points distributed from sales points based on a contribution ratio calculated based on the provision).

Information on a result of use or repair regarding use or repair of a product produced using provided plastic (for example, a use time or the number of repairs of a product using the plastic provided by the provider 100, or points distributed from a use point or a repair point based on a contribution ratio calculated based on the provision).

According to FIG. 9, the user 300 may be able to view at least a part of the information in the traceability data group.

Although one embodiment has been described above, this embodiment is an example for describing the invention, and the scope of the invention is not limited to this embodiment. The invention can be implemented in various other forms. For example, the invention can also be applied to the traceability of renewable materials other than plastics (for example, metal materials such as empty cans and glass materials such as bottles).

The above embodiment can be summarized as follows. The following summary may include a supplementary description of the above description and a description of modifications.

A renewable material traceability system (for example, traceability system 1) includes a collection system (for example, collection system 2), a production system (for example, production system 3), and a support system (for example, support system 190). Each time any one or more types of renewable materials are provided by any provider, the collection system acquires renewable material information, which is information on the one or more types of renewable materials, and provider information, which includes information indicating the provider. The production system allocates, for each product to be produced, a renewable material lot for each of one or more types of renewable materials to be used as materials for the product from among one or more types of renewable materials that are provided and collected. The support system notifies each provider of evaluation data (data as an evaluation related to the provision by the provider) obtained based on data associated with the provider from among a traceability data group. The traceability data group includes material traceability data, which is data including a set of the renewable material information and the provider information each time a product is provided, and production traceability data, which is data including information indicating a lot allocated to each product for each of one or more types of renewable materials used as materials for the product. The support system may include at least a part of the functions of the collection system and the production system.

According to such a traceability data group, the provided renewable material and the recycled product are associated with the provider. In the traceability data group, it is possible to trace which renewable material was provided by which provider and which product the renewable material was used in, and the provider is notified of an evaluation according to the trace. Therefore, an incentive to provide the renewable material is given to the provider, thereby encouraging the provider to provide more renewable materials.

The collection system may be capable of communicating with at least one of a determination device (for example, determination device 20) that determines a type of the renewable material and shows a determination result including the determined type to a provider, and a linked application that is an application installed in a mobile terminal (for example, mobile terminal 101) that is a mobile information processing terminal and receives information indicating the determination result by the determination device. The renewable material information may include information indicating the type of the renewable material included in the determination result by the determination device, which is information received from the determination device or the linked application. Accordingly, a provider can be automatically associated with the type of the renewable material provided by the provider in the material traceability data.

When the same type of renewable material provided by different providers is provided in the same lot, the material traceability data may include information indicating the lot and the provision by the different providers, the production traceability data may include information indicating the lot and a product using the lot, and the evaluation data to be notified to each of the different providers may be based on the lot. As described above, even if one lot includes the same type of renewable material provided by different providers, it is possible to appropriately evaluate each of the different providers and notify each provider of the evaluation.

When a lot is obtained by recycling one or more lots in a production process after collection, the production traceability data may include information indicating a quality measured for the obtained lot. Accordingly, for example, by producing products in lots of the same or similar quality, it is possible to contribute to production according to the quality, and as a result, it is possible to notify a provider who provides the renewable material used in the production of an appropriate evaluation.

For each product, the production system or the support system may determine, for each of one or more types of materials required for a product of a type to which the product belongs, one or more lots including the type of material to determine a lot combination for the product. Accordingly, it is possible to produce products in an appropriate lot combination.

The material traceability data may include, for each lot of the renewable material, information indicating an amount (for example, weight) of the renewable material provided in the lot. For each type of material of a product type to which at least one product belongs, the production system or the support system may determine, based on the material traceability data, one or more lots to be input to a production line such that a total amount of the type of material is equal to or greater than a required amount of the type of material and a difference between the total amount and the required amount is the smallest. Accordingly, it can be expected to reduce the amount of renewable materials to be discarded.

The material traceability data may include information indicating a provider and an amount of a renewable material provided for each provision (for example, reception on the collection system). The production system or support system may perform the following (a) to (c) for each product based on the traceability data group. The evaluation data to be notified to each of the one or more providers may include data indicating the point determined for the provider. Accordingly, an appropriate point according to the amount of the provided renewable material is provided to the provider, and thus it is possible to appropriately give an incentive. (a) For each of one or more lots allocated to the product, one or more providers who provide the renewable material provided in the lot, and an amount of the renewable material provided by the provider in the lot for each of the one or more providers are specified. (b) A contribution ratio of the provider for the product is calculated, based on the provider and the amount of the renewable material specified for each lot allocated to the product. (c) For each of one or more events including completion of product production for the product, when the event occurs, a point to the provider is determined by assigning a point corresponding to the event to each of the specified one or more providers according to the calculated contribution ratio of the provider.

The traceability system may further include an event system (for example, the sales system 4 and/or the use and repair system 5) configured to acquire, for each product, information on any event other than production completion when the event occurs. The traceability data group may include event traceability data (for example, the event traceability data 61) including information on an occurred event. When information on the occurred event among one or more events including production completion is acquired for at least one product, either the production system or the event system corresponding to the occurred event, or the support system may determine whether a trace is to be acquired from the traceability data group, the trace including which provider provides a renewable material used to produce the product, and may associate the information on the event with the product in the traceability data group, if a result of the determination is true. That is, before the information on the event is stored in the traceability data group, it is confirmed whether the data is stored to enable tracing up to the latest event. Accordingly, the traceability data group can be appropriately updated. For example, in FIG. 9, such confirmation may be performed for each of production result registration, sales result registration, and use and repair result registration before execution of the registration, and the registration may be executed when it is confirmed that the data is appropriately stored in a traceable manner. For each product, the one or more events may include at least one of sales, use, and repair of the product in addition to the production completion of the product.

At least one of the collection system, the production system, and the support system may anonymize all or a part of information on at least a provider in the traceability data group. Accordingly, even if a person other than the provider, such as the user 300, is permitted to access the information, at least information on the provider can be provided in a manner that makes it difficult to specify the provider.

For a product using a newly provided renewable material, when a point is updated for a provider who provides the renewable material due to the occurrence of an event, the support system may notify the provider of the evaluation data as point data indicating the updated point. Accordingly, the provider can quickly know the point update.

The material traceability data may include, for each lot, information indicating a collection time as a time when the lot is collected, and the production system may preferentially allocate a lot with an earlier collection time to a product to be input to a production line. The material traceability data may include, for each provision, information indicating a provision place as a place where the provision is made, and the production system may configure a lot with renewable materials provided at provision places belonging to the same region. The material traceability data may include, for each provision, information indicating a provision place as a place where the provision is made, the renewable material information or the provider information acquired by the collection system may include a recycling request, which is a request from a provider, indicating whether the renewable material is to be used in as few products as possible or as many products as possible, and the production system may determine a lot to be allocated to a product according to each recycling request.

## Claims

1. A renewable material traceability system comprising:
a collection system configured to acquire, each time any one or more types of renewable materials are provided by any provider, renewable material information, which is information on the one or more types of renewable materials, and provider information, which includes information indicating the provider;
a production system configured to allocate, for each product to be produced, a renewable material lot for each of one or more types of renewable materials to be used as materials for the product from among one or more types of renewable materials that are provided and collected; and
a support system configured to notify each provider of evaluation data obtained based on data associated with the provider from among a traceability data group, the evaluation data being data as an evaluation related to the provision by the provider, the traceability data group including material traceability data, which is data including a set of the renewable material information and the provider information each time a product is provided, and production traceability data, which is data including information indicating a lot allocated to each product for each of one or more types of renewable materials used as materials for the product.

2. The renewable material traceability system according to claim 1, wherein
the collection system is capable of communicating with at least one of a determination device that determines a type of the renewable material and shows a determination result including the determined type to a provider, and a linked application that is an application installed in a mobile terminal that is a mobile information processing terminal and receives information indicating the determination result by the determination device, and
the renewable material information includes information indicating the type of the renewable material included in the determination result by the determination device, which is information received from the determination device or the linked application.

3. The renewable material traceability system according to claim 1, wherein
when the same type of renewable material provided by different providers is provided in the same lot,
the material traceability data includes information indicating the lot and the provision by the different providers,
the production traceability data includes information indicating the lot and a product using the lot, and
the evaluation data to be notified to each of the different providers is based on the lot.

4. The renewable material traceability system according to claim 1, wherein
when a lot is obtained by recycling one or more lots in a production process after collection, the production traceability data includes information indicating a quality measured for the obtained lot.

5. The renewable material traceability system according to claim 1, wherein
for each product, the production system or the support system determines, for each of one or more types of materials required for a product of a type to which the product belongs, one or more lots including the type of material to determine a lot combination for the product.

6. The renewable material traceability system according to claim 5, wherein
the material traceability data includes, for each lot of the renewable material, information indicating an amount of the renewable material provided in the lot, and
for each type of material of a product type to which at least one product belongs, the production system or the support system determines, based on the material traceability data, one or more lots to be input to a production line such that a total amount of the type of material is equal to or greater than a required amount of the type of material and a difference between the total amount and the required amount is the smallest.

7. The renewable material traceability system according to claim 1, wherein
the material traceability data includes information indicating a provider and an amount of a renewable material provided for each provision, and
for each product, based on the traceability data group, the production system or the support system
specifies, for each of one or more lots allocated to the product, one or more providers who provide the renewable material provided in the lot, and an amount of the renewable material provided by the provider in the lot for each of the one or more providers,
calculates a contribution ratio of the provider for the product, based on the provider and the amount of the renewable material specified for each lot allocated to the product, and
for each of one or more events including completion of product production for the product, determines, when the event occurs, a point to the provider by assigning a point corresponding to the event to each of the specified one or more providers according to the calculated contribution ratio of the provider, and
the evaluation data to be notified to each of the one or more providers includes data indicating the point determined for the provider.

8. The renewable material traceability system according to claim 1, further comprising:
an event system configured to acquire, for each product, information on any event other than production completion when the event occurs, wherein
the traceability data group includes event traceability data including information on an occurred event, and
when information on the occurred event among one or more events including production completion is acquired for at least one product, either the production system or the event system corresponding to the occurred event, or the support system
determines whether a trace is to be acquired from the traceability data group, the trace including which provider provides a renewable material used to produce the product, and
associates, if a result of the determination is true, the information on the event with the product in the traceability data group.

9. The renewable material traceability system according to claim 8, wherein
for each product, the one or more events include at least one of sales, use, and repair of the product in addition to the production completion of the product.

10. The renewable material traceability system according to claim 1, wherein
at least one of the collection system, the production system, and the support system anonymizes all or a part of information on at least a provider in the traceability data group.

11. The renewable material traceability system according to claim 7, wherein
for a product using a newly provided renewable material, when a point is updated for a provider who provides the renewable material due to the occurrence of an event, the support system notifies the provider of the evaluation data as point data indicating the updated point.

12. The renewable material traceability system according to claim 1, wherein
the material traceability data includes, for each lot, information indicating a collection time as a time when the lot is collected, and
the production system preferentially allocates a lot with an earlier collection time to a product to be input to a production line.

13. The renewable material traceability system according to claim 1, wherein
the material traceability data includes, for each provision, information indicating a provision place as a place where the provision is made, and
the production system configures a lot with renewable materials provided at provision places belonging to the same region.

14. The renewable material traceability system according to claim 1, wherein
the material traceability data includes, for each provision, information indicating a provision place as a place where the provision is made,
the renewable material information or the provider information acquired by the collection system includes a recycling request, which is a request from a provider, indicating whether the renewable material is to be used in as few products as possible or as many products as possible, and
the production system determines a lot to be allocated to a product according to each recycling request.

15. A renewable material traceability method in which a computer performs:
acquiring, each time any one or more types of renewable materials are provided by any provider, renewable material information, which is information on the one or more types of renewable materials, and provider information, which includes information indicating the provider;
allocating, for each product to be produced, a renewable material lot for each of one or more types of renewable materials to be used as materials for the product from among one or more types of renewable materials that are provided and collected; and
notifying each provider of evaluation data obtained based on data associated with the provider from among a traceability data group, the evaluation data being data as an evaluation related to the provision by the provider, the traceability data group including material traceability data, which is data including a set of the renewable material information and the provider information each time a product is provided, and production traceability data, which is data including information indicating a lot allocated to each product for each of one or more types of renewable materials used as materials for the product.
